# EUROPÄISCHE PATENTSCHRIFT

(11) **EP 0 834 055 B1**
(45) Veröffentlichungstag und Bekanntmachung des Hinweises auf die Patenterteilung: **11.10.2000**
(21) Anmeldenummer: 96923885.6
(22) Anmeldetag: 21.06.1996
(51) Int. Cl.: G01B 21/16, B23P 19/02

(54) **MESSVORRICHTUNG**
MEASUREMENT DEVICE
DISPOSITIF DE MESURE

(30) Priorität: 21.06.1995 DE 19522503
(43) Veröffentlichungstag der Anmeldung: 08.04.1998
(73) Patentinhaber: Hilde Fritz Montagebetrieb, 72658 Bempflingen (DE)
(72) Erfinder: FRITZ, Frank, D-72658 Bempflingen (DE); FRITZ, Hermann, D-72658 Bempflingen (DE)
(74) Vertreter: Hering, Hartmut, Dipl.-Ing.
(86) Internationale Anmeldenummer: EP9602708
(87) Internationale Veröffentlichungsnummer: WO9701077

(56) Entgegenhaltungen:
- WO-A-81/03636
- DE-A- 4 100 410
- PATENT ABSTRACTS OF JAPAN vol. 018, no. 418 (M-1650), 5.August 1994 & JP,A,06 126551 (MATSUSHITA ELECTRIC WORKS LTD), 10.Mai 1994,
- PATENT ABSTRACTS OF JAPAN vol. 016, no. 260 (P-1369), 12.Juni 1992 & JP,A,04 062411 (MUSASHI SEIMITSU IND CO LTD), 27.Februar 1992,

## Beschreibung

Die Erfindung befaßt sich mit einer Meßvorrichtung in einer Montagehilfseinrichtung für Fügebearbeitungen zur Qualitätssicherung. Generell gesehen ist diese Meßvorrichtung für Einpreßund Verformungsvorgänge, wie Einpressen, Verformen, Verstemmen, Nieten, Bördeln usw., geeignet.

In EP-A-0 288 719 ist eine Steuereinrichtung für einen pneumohydraulischen Kraftantrieb beschrieben. Die Betätigungsstange des Kraftantriebs ist mit einer Wegmeßeinheit gekoppelt, wodurch Werkstücke mit frei programmierbaren und geregelt einstellbaren Kraft/Weg-Verläufen bearbeitet werden können. Die Wegmeßeinheit ist zusätzlich an den Kraftantrieb angebaut und erfaßt den gesamten Verfahrweg der Betätigungsstange mit Eilgang für die Zustellung und Langsamgang für die Verformungsbearbeitung, wie eine Fügebearbeitung. Über die Wegmeßeinheit erfolgt auch die Umschaltung des Kraftantriebs vom Eilgang auf den Langsamgang und umgekehrt. Zusätzlich umfaßt die Steuereinrichtung für den Kraftantrieb einen Drucksensor für die Erfassung des auf die Betätigungsstange aufgebrachten Arbeitsdruck insbesondere im Langsamgang. In Verbindung mit der Wegstreckenmessung gekoppelt mit einer Betätigungsdruckerfassung kann eine qualitative Bestimmung der Fügearbeiten vorgenommen werden, und es lassen sich in Abhängigkeit von Vorgabekriterien hierfür Ausschußteile erkennen und aussondern. Eine derartige Auslegung einer Meßanordnung ist gerätetechnisch kompliziert und führt zu relativ hohen zusätzlichen Kosten bei derartigen Maschinen mit einem pneumohydraulischen Kraftantrieb. Daher sind derartige, zur Qualitätssicherung erforderlichen Maßnahmen kostenaufwendig.

In WO 81 03636 sind ein Verfahren und eine Vorrichtung zum Verbinden von zwei Kurbelwellenhälften über einen Kurbelzapfen unter Einhaltung von genauen geometrischen Toleranzen beschrieben. Zur Erleichterung der Bestimmung der bei dem Fügevorgang zurückgelegten Wegstrecke des Kubelzapfens wird ein Kontaktsensor vorgesehen, mittels welchem sich die axiale Position der distalen Fläche des Flansches bezüglich einer Referenzposition für diese Fläche messen läßt, welche durch eine Musterkurbelwelle vorgegeben ist, um ein sogenanntes Kopierfügebearbeitungsverfahren zu verwirklichen. Die hierbei gewonnenen Daten werden dann mittels eines Computers weiterverarbeitet. Hierbei erfolgt eine relativ oder indirekte Erfassung der Wegstrecke bei der Fügebearbeitung durch vergleichende Betrachtung mit der als Muster eingesetzten Musterkurbelwelle.

Demgegenüber zielt die Erfindung darauf ab, eine Meßvorrichtung in einer Montagehilfseinrichtung für Fügebearbeitungen bereitzustellen, welche auf konstruktiv einfache und kostengünstige Weise eine zuverlässige Erfassung der Qualität der vorgenommenen Fügebearbeitung gestattet.

Nach der Erfindung wird hierzu eine Meßvorrichtung in einer Montagehilfseinrichtung für Fügebearbeitungen nach Patentanspruch 1 bereitgestellt.

Die erfindungsgemäße Meßvorrichtung erfaßt somit unmittelbar im Zusammenwirken mit den zu verbindenden Teilen als Meßstrecke die beim Verbindungsvorgang zurückgelegte Wegstrecke, und zwar so, daß nur diese bei der Verbindungsbearbeitung zurückgelegte Wegstrecke als Maß für die Qualität der Verbindungsarbeiten erfaßt wird, ohne daß eine Einbindung in die Steuerung eines Kraftantriebs einer Maschine erforderlich ist. Hierdurch kann man auf konstruktiv einfache und kostengünstige Weise unter Einsatz eines Meßtasters eine Kenngröße für die Verbindungsarbeiten, wie die Fügearbeiten, unmittelbar im Zusammenwirken mit den zu verbindenden Teilen erfassen, welche eine zuverlässige Aussage über die Qualität der Verbindungsarbeiten bzw. Fügearbeiten erlaubt. Eine Umrüstung der Steuerung des Kraftantriebs ist beim Einsatz der erfindungsgemäßen Meßvorrichtung nicht notwendig, und die erfindungsgemäße Meßvorrichtung läßt sich unabhängig von dem Kraftantrieb der Maschine und deren Steuereinrichtung einsetzen.

Dadurch, daß der Meßtaster in einer Auflage beweglich gelagert ist, auf welcher das eine für die Meßerfassung wesentliche, zu verbindende Teil bei der Fügebearbeitung aufliegt, ist der Meßtaster, welcher empfindlich ist, geschützt in einer Auflage der Montagehilfseinrichtung untergebracht. Da die Auflage zur Aufnahme eines der zu verbindenden Teile dient, kann auf konstruktiv einfache Weise erreicht werden, daß der Tastkopf zuverlässig gegen eines der zu verbindenden Teile vor der Durchführung der eigentlichen Fügebearbeitung anliegt, wobei diese Anlageberührung unabhängig von gegebenenfalls zulässigen Toleranzen sichergestellt wird. Diese Toleranzen beeinflussen auch nicht die Genauigkeit des mit Hilfe des Meßtasters erzielten Meßergebnisses, da der Meßtaster eine Relativmessung der Wegstrecke bei der eigentlichen Fügebearbeitung vornimmt. Hierdurch wird ein automatischer Toleranzabgleich erreicht, um möglichst für die Bewertung der Qualität der Fügebearbeitungen zuverlässige Meßgrößen zu erhalten. Dank der federnden Abstützung der Auflage auf der Grundplatte und deren vorzugsweise vertikal bewegliche Lagerung mittels einer Führung ist eine zuverlässige Parallelführung der Auflage während des Fügevorganges ohne Aufbiegungen und dergleichen gewährleistet, so daß auch hierdurch bedingte Meßergebnisungenauigkeiten ausgeschaltet werden können. Speziell bei einer derartigen Auslegung mit Auflage und Grundplatte liegt das vom Meßkopf abgewandte Ende des Meßtasters auf der Grundplatte auf. So nimmt der Meßtaster vor der Ausführung der eigentlichen Verbindungsbearbeitung unter Abgleich von Toleranzen immer eine vorbestimmte Ausgangsposition ein, so daß die mit Hilfe des Meßtasters erhaltenen gemessenen Wegstrecken in unverfälschter Weise und in unmittelbarem Zusammenhang mit der bei der Fügebearbeitung zurückgelegten Wegstrecke stehen.

Vorzugsweise ist der Meßtaster in eine Durchgangsbohrung in der Auflage auswechselbar eingesetzt. Hierdurch kann der Meßtaster im Bedarfsfalle ausgewechselt und gereinigt oder ersetzt werden, und ferner ist der Meßtaster über die zu erfassende Wegstrecke hinweg vor Verschmutzungen geschützt in der Auflage angeordnet.

Vorzugsweise ist der Meßtaster mit einer Einrichtung zum Auswerten und Dokumentieren der Meßergebnisse verbunden. Diese Einrichtung kann beispielsweise von einem Kleincomputer oder dergleichen gebildet werden, welcher mit Hilfe einer geeigneten Software die Auswertung und die Dokumentation der Meßergebnisse vornimmt. Insbesondere im Hinblick auf eine Qualitätssicherung spielt eine solche Dokumentation eine große Rolle.

Gemäß einer bevorzugten Ausführungsform ist das zweite zu verbindende Teil in eine Bohrung des ersten zu verbindenden Teils einsetzbar und es liegt auf einem auf der Grundplatte abgestützten Stempel auf. Dieser Stempel bildet ein Widerlager bei dem vorzunehmenden Einpreßvorgang. Der Stempel durchsetzt vorzugsweise eine zugeordnete Durchgangsbohrung in der Auflage, in welche das zweite zu verbindende Teil eingelegt ist. Hierdurch erhält man eine kompakt ausgelegte integrierte Kombination von Meßvorrichtung und Montagehilfseinrichtung.

Unabhängig von den speziellen Anwendungsbeispielen ist es für die erfindungsgemäße Meßvorrichtung wesentlich, daß unter Abgleich von Toleranzen der zu verbindenden Teile beispielsweise die bei der Fügebearbeitung zurückgelegte Wegstrecke zuverlässig für die Bewertung der Qualität der durchgeführten Arbeiten erfaßt wird. Dies wird bei der Erfindung mit Hilfe des vorgesehen Meßtasters auf zuverlässige, kostengünstige und platzsparende Weise erreicht.

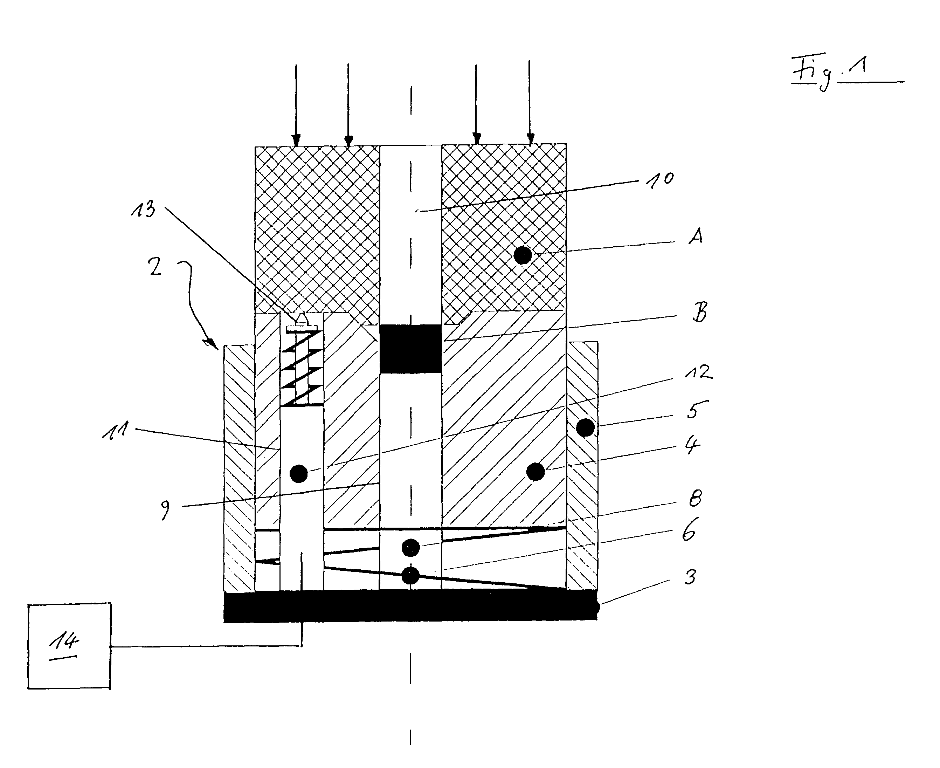

Die Erfindung wird nachstehend an Hand einer bevorzugten Ausführungsform unter Bezugnahme auf die beigefügte Zeichnung näher erläutert.

Die einzige Figur der Zeichnung zeigt in einer schematischen Schnittansicht eine Montagevorrichtung für eine Fügebearbeitung von zwei mittels einer Fügeverbindung zu verbindenden Teilen.

Die Erfindung ist natürlich nicht auf das dargestellte Ausführungsbeispiel beschränkt, sondern insbesondere sind die Gestalt und die Grundauslegung der Montagevorrichtung von dem jeweils vorzunehmenden Bearbeitungsvorgang abhängig. Obgleich nachstehend die Meßvorrichtung gemäß der bevorzugten Ausführungsform in Verbindung mit einem Fügevorgang erläutert ist, ist sie ohne Beschränkung hierauf für alle jene Anwendungsfälle geeignet, bei denen Einpreß- und Verformungsvorgänge auftreten, wie beim Einpressen, Verformen, Verstemmen, Nieten, Bördeln oder dergleichen.

Bei dem dargestellten Beispiel soll ein Teil A mit einem Teil B über eine Fügeverbindung verbunden werden. Bei dieser Fügebearbeitung soll das Teil B als Beispiel in eine Bohrung 10 im Teil A eingepreßt werden.

Hierzu wird eine insgesamt mit 2 bezeichnete Montagehilfseinrichtung eingesetzt, welche eine feste Grundplatte 3 und eine Auflage 4 umfaßt. Die Auflage 4 ist mittels einer Führung 5 in vertikaler Richtung gleitbeweglich geführt. Die Auflage 4 ist mittels einer Feder 6 beweglich und federnd nachgiebig gegenüber der Grundplatte 3 abgestützt. Die von der Grundplatte 3 abgewandte Seite der Auflage 4 ist derart gestaltet, daß das eine zu verbindende Teil A passend aufliegt und durch die Auflage 4 in vorbestimmter Weise positioniert wird. Unter Zuordnung zu dem zweiten zu verbindenden Teil B wird die Auflage von einem Stempel 8 durchsetzt, welcher durch eine Durchgangsbohrung 9 in der Auflage 4 geht. Die eine Stirnseite des Stempels 8 liegt auf der Grundplatte 3 auf, während auf dem gegenüberliegenden Ende des Stempels 8 das zweite zu verbindende bzw. zu fügende Teil B aufliegt und in die Durchgangsbohrung 9 eingelegt ist. Somit wird mit Hilfe der Auflage 4 auch das zweite zu verbindende Teil B bezüglich des ersten zu verbindenden Teils A und insbesondere der dort zur Aufnahme vorgesehenen Durchgangsbohrung 10 ausgerichtet.

Ferner ist beim dargestellten Beispiel die Auflage 4 mit einer weiteren Durchgangsbohrung 11 versehen, in die ein Meßtaster 12 eingesetzt ist. Ein Ende des Meßtaster liegt auf der Grundplatte 3 wie der Stempel 8 auf, während ein Tastkopf 13 des Meßtasters 12, welcher federnd abgestützt ist, gegen eine Fläche eines der zu fügenden bzw. zu verbindenden Teile A, B anliegt, beim dargestellten Beispiel gegen eine Fläche des zu verbindenden Teils A. Wie ferner schematisch gezeigt ist, ist der Meßtaster 12 mit einer Einrichtung 14 zum Auswerten und Dokumentieren von Meßergebnissen verbunden, welche mit Hilfe des Meßtasters 12 erfaßt wurden.

Bei der Verbindung der beiden Teile A und B, das heißt, wenn das Teil B in die Bohrung 10 des Teils A beim dargestellten Beispiel einzupressen ist (Fügeverbindung), wird wie mit einem Pfeil angedeutet, beispielsweise mit Hilfe eines nicht näher dargestellten Kraftantriebs, eine Druckkraft auf das Teil A aufgebracht. Entgegen der Wirkung der Feder 6 wird dann die Auflage 4 zusammen mit dem dort aufliegenden Teil A in der einzigen Figur in Richtung nach unten bewegt, wobei das zweite Teil B in die Bohrung 10 eingefügt und eingepreßt wird. Bei dieser Fügebearbeitung bzw. bei diesem Einpreßvorgang wird auch der Tastkopf 13 des Meßtasters 12 entgegen der Federvorbelastung bewegt, so daß der Meßtaster 12 unter Abgleich der Toleranzabweichungen der Teile A und B genau die beim Verbindungsvorgang bzw. Fügevorgang zurückgelegte Wegstrecke erfaßt. Diese Wegstrecke erlaubt eine zuverlässige Aussage über die Qualität der durchgeführten Fügearbeiten. Die Meßergebnisse können dann mit Hilfe der Einrichtung 14 ausgewertet und dokumentiert werden. Hierdurch wird mit Hilfe des Meßtasters 12 eine Qualitätssicherung für die Fügearbeiten erreicht, ohne daß man zusätzliche und komplizierte Einrichtungen benötigt, welche mit dem Kraftantrieb, welcher nicht dargestellt ist, gekoppelt sind. Ferner gestattet die Anordnung des Meßtasters, welcher gegen eine Fläche eines der zu verbindenden Teile, beispielsweise A, in dem Zustand anliegt, in dem dieses Teil A auf der zugeordneten Auflage 4 in positionsgerechter Anordnung aufliegt, einen selbsttätigen Toleranzabgleich bezüglich den Fertigungstoleranzen von dem zu verbindenden Teil A, und da der Meßtaster 12 die Wegstrecke als relative Meßstrecke erfaßt, erfolgt auch ein selbsttätiger Toleranzabgleich durch diese Anordnung gegenüber dem zweiten zu verbindenden Teil B. Daher ist das Meßergebnis für die mit Hilfe des Meßtasters 12 erfaßte Wegstrecke bei den Verbindungsarbeiten, wie den Fügearbeiten, ein aussagekräftiges und zuverlässiges Maß für die Qualität der hergestellten Verbindung.

Mit Hilfe einer geeigneten Software kann die Einrichtung 14 dann die so mit Hilfe des Meßtasters 12 erhaltenen Meßergebnisse auswerten und entsprechend den Wünschen des Anwenders gegebenenfalls dokumentieren.

Falls der Meßtaster 12 verbraucht, beschädigt oder verschmutzt ist, kann er einfach aus der Durchgangsbohrung 11 der Auflage 4 ausgebaut und entweder gereinigt oder durch einen neuen ersetzt werden. Aufwendige und bisher erforderliche Eicharbeiten und Einstellarbeiten werden hierbei nicht benötigt, da der gegebenenfalls neu eingesetzte Meßtaster 12 wie der vorangehende ebenfalls eine relative Wegstreckenmessung unter automatischem Abgleich von Toleranzen gestattet. Über die Einrichtung 14 können gegebenenfalls auch Meldungen bezüglich gut und schlecht bei der hergestellten Verbindung abgegeben werden, so daß die als schlecht bewerteten verbunden bzw. gefügten Teile als Ausschußteile ausgesondert werden können.

Wenn der Verbindungsvorgang der beiden zu verbindenden Teile A und B mit Erfolg abgeschlossen ist, wird der Kraftantrieb zurückgefahren und das fertiggestellte Teil wird von der Auflage 4 abgenommen. Nachdem dann die nächsten beiden zu verbindenden Teile wieder auf die Auflage 4 aufgelegt und/oder in die Durchgangsbohrung 9 eingelegt sind, kann dann ein weiterer Verbindungsvorgang durchgeführt werden. Aufgrund der Auswertung über die Einrichtung 14 können auch Tendenzen der hintereinander durchgeführten Verbindungsarbeiten, wie der Fügearbeiten, ermittelt werden, aus denen dann zu erkennen ist, daß gegebenenfalls die Ergebnisse der Verbindungsarbeiten schlechter werden, woraus dann abgelesen werden kann, daß die mittels einer Fügeverbindung zu verbindenden Teile A und B gegebenenfalls von Haus aus außerhalb des gewünschten Toleranzbereiches liegen, um den Anfall einer großen Anzahl von Ausschußteilen zu vermeiden und schon frühzeitig Gegenmaßnahmen einleiten zu können.

Obgleich die Erfindung voranstehend an Hand einer bevorzugten Ausführungsform erläutert worden ist, ist die Erfindung natürlich hierauf nicht beschränkt, sondern es sind zahlreiche Abänderungen und Modifikationen möglich, die der Fachmann im Bedarfsfall treffen wird, und welche von der Art der vorzunehmenden Bearbeitung und den zu verbindenden Teilen abhängig sein können. Allen diesen Ausführungsformen ist es aber gemeinsam, daß mit Hilfe eines Meßtasters 12 zuverlässig die bei der Verbindung von wenigstens zwei zu verbindenden Teilen A und B zurückgelegte relative Wegstrecke zuverlässig und genau unter Abgleich von Toleranzen der zu verbindenden Teile A und B erfaßt wird und hierdurch zuverlässig die Qualität der hergestellten Verbindung bewertet werden kann.

### Bezugszeichenliste

- A: Erstes zu verbindendes Teil
- B: Zweites zu verbindendes Teil

- 2: Montagehilfseinrichtung
- 3: Grundplatte
- 4: Auflage
- 5: Führung
- 6: Feder
- 8: Stempel
- 9: Durchgangsbohrung für Stempel 8
- 10: Durchgangsbohrung in zu verbindendem Teil A
- 11: Durchgangsbohrung für Meßtaster 12
- 12: Meßtaster
- 13: Tastkopf
- 14: Einrichtung zum Auswerten und Dokumentieren der Meßergebnisse

## Patentansprüche

1. Meßvorrichtung in einer Montagehilfseinrichtung für Fügebearbeitungen mit einer federnd auf einer Grundplatte (3) abgestützten Auflage (4), auf welcher das eine für die Meßerfassung wesentliche, zu verbindende Teil (A) bei der Fügebearbeitung aufliegt, wobei die Meßvorrichtung beweglich in einer Durchgangsbohrung (11) in der Auflage (4) eingesetzt und als Meßtaster (12) ausgebildet ist, der mit seinem vom Tastkopf (13) abgewandten Ende auf der Grundplatte (3) aufliegt und beim Fügevorgang mit seinem Tastkopf (13) gegen das eine zu verbindende Teil (A) anliegt, so daß er die beim Fügevorgang zurückgelegte Wegstrecke für die Bewertung der Qualität der Fügebearbeitung erfaßt.

2. Meßvorrichtung nach Anspruch 1, bei der die Auflage (4) mittels einer Führung (5) vertikalbeweglich gelagert ist.

3. Meßvorrichtung nach Anspruch 1 oder 2, bei welcher der Meßtaster (12) in die Durchgangsbohrung (11) in der Auflage (4) auswechselbar eingesetzt ist.

4. Meßvorrichtung nach einem der vorangehenden Ansprüche, bei welcher der Meßtaster (12) mit einer Einrichtung (14) zum Auswerten und Dokumentieren der Meßergebnisse verbunden ist.

5. Meßvorrichtung nach einem der vorangehenden Ansprüche, bei der das zweite zu verbindende Teil (B) in eine Bohrung (10) des ersten zu verbindenden Teils (A) einsetzbar ist, und auf einem auf der Grundplatte (3) abgestützten Stempel (8) aufliegt.

6. Meßvorrichtung nach Anspruch 5, bei welcher der Stempel (8) eine zugeordnete Durchgangsbohrung (9) in der Auflage (4) durchsetzt.

## Claims

1. Measuring device in an assembly auxiliary device for joint work having a support (4) supported resiliently on a base plate (3), on which support (4) the one part (A) to be connected which is essential for measurement recording rests during joint work, wherein the measuring device is inserted movably in a passage bore (11) in the support (4) and is designed as a measuring operator (12), which rests on the base plate (3) with its end facing away from the operator head (13) and rests against the one part (A) to be connected during the joining process with its operator head (13), so that it records the distance covered during the joining process for assessing the quality of the joint work.

2. Measuring device according to claim 1, in which the support (4) is mounted to be vertically movable by means of a guide (5).

3. Measuring device according to claim 1 or 2, in which the measuring operator (12) is inserted to be exchangeable in the passage bore (11) in the support (4).

4. Measuring device according to one of the preceding claims, in which the measuring operator (12) is connected to a device (14) for evaluating and documenting the measured results.

5. Measuring device according to one of the preceding claims, in which the second part (B) to be connected can be inserted in a bore (10) of the first part (A) to be connected, and rests on a punch (8) supported on the base plate (3).

6. Measuring device according to claim 5, in which the punch (8) penetrates an assigned passage bore (9) in the support (4).

## Revendications

1. Dispositif de mesure dans un appareil auxiliaire de montage pour jointoiement avec un support (4) qui s'appuie avec un ressort sur une plaque de base (3) et sur lequel repose une partie à relier (A), essentielle pour la détection de la mesure en ce qui concerne le jointoiement, le dispositif de mesure étant posé mobile dans un trou (11) percé dans le support (4) et réalisé en palpeur de mesure (12) qui, par son extrémité opposée à la tête du palpeur (13), s'appuie sur la plaque de base (3) et, pendant le procédé de liaison, appuie sa tête de palpeur (13) contre la partie à relier (A), de façon à détecter le chemin parcouru pendant le procédé de liaison pour évaluer la qualité du jointoiement.

2. Dispositif de mesure suivant la revendication 1, dans lequel le support (4) est mobile verticalement au moyen d'un guide (5).

3. Dispositif de mesure suivant la revendication 1 ou 2, dans lequel le palpeur de mesure (12) est amovible dans le trou (11) qui passe à travers le support (4).

4. Dispositif de mesure suivant une des revendications précédentes, dans lequel le palpeur de mesure (12) est relié à un dispositif (14) d'évaluation et d'enregistrement des résultats de mesure.

5. Dispositif de mesure suivant une des revendications précédentes, dans lequel la seconde partie (B) à relier peut être installée dans un trou (10) de la première partie à relier (A) et repose sur un noyau (8) supporté par la plaque de base (3).

6. Dispositif de mesure suivant la revendication 5, dans lequel le noyau (8) traverse un trou correspondant (9) à travers le support (4).
